# EUROPEAN PATENT SPECIFICATION

(11) **EP 3 321 317 B1**
(45) Date of publication and mention of the grant of the patent: **17.06.2020**
(21) Application number: 16841559.4
(22) Date of filing: 22.08.2016
(51) Int. Cl.: C08L 23/22, B29C 33/12, B29C 35/02, C08K 3/04, C08K 3/22, C08L 11/00, C08L 45/00, C08L 65/00, B29D 30/06, C08K 3/08, C08K 3/10, C08L 25/04, C08L 91/00, B29C 43/36, B29C 43/00

(54) **RUBBER COMPOSITION FOR VULCANIZING BLADDER AND VULCANIZING BLADDER**
KAUTSCHUKZUSAMMENSETZUNG FÜR VULKANISIERUNGSBLASE SOWIE VULKANISIERUNGSBLASE
COMPOSITION DE CAOUTCHOUC POUR VESSIE DE VULCANISATION, ET VESSIE DE VULCANISATION

(30) Priority: 01.09.2015 JP 2015171978
(43) Date of publication of application: 16.05.2018
(73) Proprietor: Sumitomo Rubber Industries, Ltd., Kobe-shi, Hyogo 651-0072 (JP)
(72) Inventor: TAKAGI, Keiji, Kobe-shi Hyogo 651-0072 (JP); MIYAZAKI, Tatsuya, Kobe-shi Hyogo 651-0072 (JP)
(74) Representative: Manitz Finsterwald Patent- und Rechtsanwaltspartnerschaft mbB
(86) International application number: PCT/JP2016/074364
(87) International publication number: WO 2017/038527

(56) References cited:
- EP-A1- 3 305 843
- WO-A1-2014/156593
- JP-A- S6 140 114
- JP-A- S61 195 810
- JP-A- S63 125 311
- JP-A- 2010 285 525
- JP-A- 2010 285 526
- JP-A- 2012 224 720
- JP-A- 2014 531 997
- JP-A- 2015 164 982
- KR-A- 20000 046 698
- US-A- 4 943 609
- US-A1- 2015 011 676

## Description

### TECHNICAL FIELD

The present invention relates to a rubber composition for vulcanizing bladder and a vulcanizing bladder formed of the rubber composition.

### BACKGROUND ART

A vulcanizing bladder is used for tire vulcanization molding, and the tire vulcanization molding is conducted in such a way that the vulcanizing bladder is placed inside a green tire and high-pressure heating medium is filled in the vulcanization bladder so that the inside of the green tire is pushed toward a vulcanizing mold.

As a heating medium, water vapor, nitrogen gas, air, and the like are used. Because tire vulcanization molding is repeated with such heating medium in a high pressure and high temperature, 180 to 240°C, condition being filled in a vulcanization bladder, a rubber composition constituting a vulcanization bladder is expected to be excellent in heat resistance, deterioration resistance, crack resistance, and chemical resistance.

In addition, in recent years, a technique for improving vulcanization efficiency by reducing vulcanization time required for each tire is suggested. For example, Patent Document 1 describes that a rubber composition for vulcanizing bladder containing carbon fiber which is excellent in thermal conductivity allows faster heat conduction to tire in a vulcanization step and thus shorter vulcanization time required for each tire. However, in a vulcanization bladder having a balloon-like form, alignment of its fibers and others in the preferable direction of heat conduction, i.e. the thickness direction, is difficult.

Patent Document 2 discloses a rubber composition for use in vulcanizing bladder of a tire comprising 100 parts by weight of butyl rubber, 2 to 10 parts by weight of a reactive resin and 5 to 30 parts by weight of aluminium hydroxide hydrate having a particles size of 0.01 to 20 µm, in particular 0.03 µm.

Patent Documents 3, 4 and 7 to 13 disclose rubber compositions which do not comprise a metal filler.

Patent Document 5 discloses a rubber composition for a tire, comprising a rubber component comprising natural rubber, butadiene rubber and modified styrene-butadiene rubber, carbon black in an amount of 5 parts by mass, and a plurality of aluminium hydroxide particles in an amount of 1 to 60 parts by mass having an average particle diameter in a range of 1.5 µm or smaller.

Patent Document 6 is prior art under Art. 54(3) EPC and discloses a rubber composition comprising 70% by mass or more of at least one selected from butyl rubber and a halogenated butyl rubber, a terpene-based resin, and further comprising carbon black and aluminium hydroxide.

### PRIOR ART DOCUMENT

### Patent Document

Patent Document 1: JP 2012-224720 A
Patent Document 2: KR 2000 0046698 A
Patent Document 3: JP 2010 285 526 A
Patent Document 4: US 4 943 609 A
Patent Document 5: US 2015 / 0011676 A1
Patent Document 6: EP 3 305 843 A1
Patent Document 7: JPS63125311 A
Patent Document 8: JPS61195810 A
Patent Document 9: JP2010285525 A
Patent Document 10: JP2012224720 A
Patent Document 11: JP2014531997 A
Patent Document 12: WO 2014 / 156593 A1
Patent Document 13: JPS6140114 A

### SUMMARY OF THE INVENTION

### PROBLEM TO BE SOLVED BY THE INVENTION

The present invention aims to provide a rubber composition for vulcanizing bladder excellent in thermal conductivity and a vulcanizing bladder formed of the rubber composition, with which vulcanization efficiency can be improved.

### MEANS TO SOLVE THE PROBLEM

The present invention relates to a rubber composition for vulcanizing bladder comprising:
based on 100 parts by mass of a rubber component comprising 80% by mass or more of a butyl-based rubber,
20 to 200 parts by mass of at least one type of metal filler selected from the group consisting of metal powder, metal oxide powder, metal hydroxide powder, and metal nitride powder, said metal filler having a Mohs hardness of 8 or lower and a mean particle size of 0.3 to 50 µm, and
20 to 80 parts by mass of a carbon black,
wherein the rubber composition for vulcanizing bladder is not a rubber composition comprising:
   a rubber component containing 100 % by mass of a brombutyl rubber based on 100 parts by mass of the rubber component,
   45 parts by mass of carbon black based on 100 parts by mass of the rubber component,
   20 parts by mass of aluminium hydroxide having a Mohs hardness of 3 and a mean particle size of 0.3 µm or 0.6 µm or 1.0 µm or 2.5 µm based on 100 parts by mass of the rubber component.

It is preferable that the metal filler comprises aluminum hydroxide.

It is more preferable that the metal filler comprises 70 to 150 parts by mass of aluminum hydroxide having a mean particle size of 0.3 to 3 µm based on 100 parts by mass of a rubber component.

It is preferable that the rubber composition further comprises 1 to 10% by mass of a chloroprene rubber.

It is preferable that the rubber composition for vulcanizing bladder further comprises a terpene-based resin.

It is preferable that the terpene-based resin is a hydrogenated terpene-based resin having a softening point of 60 to 130°C.

Also, the present invention relates to a vulcanizing bladder for tire vulcanization formed of the rubber composition for vulcanizing bladder.

### EFFECTS OF THE INVENTION

According to the rubber composition for vulcanizing bladder of the present invention which comprises a predetermined metal filler and a predetermined carbon black in predetermined amounts relative to a rubber component comprising 80% by mass or more of a butyl-based rubber, a rubber composition for vulcanizing bladder excellent in thermal conductivity can be provided. Furthermore, according to a vulcanizing bladder formed of the rubber composition for vulcanizing bladder of the present invention, a vulcanizing bladder which is high in heat conduction rate to tire in a vulcanizing step and excellent in vulcanization efficiency can be provided.

### EMBODIMENT FOR CARRYING OUT THE INVENTION

The rubber composition for vulcanizing bladder of the present invention is a rubber composition for vulcanizing bladder which comprises a predetermined metal filler and a predetermined carbon black in predetermined amounts relative to a rubber component comprising 80% by mass or more of a butyl-based rubber.

### <Rubber component>

The rubber component according to the present invention contains a predetermined amount of a butyl-based rubber. The rubber composition for vulcanizing bladder is excellent in heat resistance when it contains a predetermined amount of a butyl-based rubber.

Examples of the butyl-based rubber include butyl rubber, halogenated butyl rubber, and the like. Butyl rubber (IIR) refers to non-halogenated butyl rubber, known as so-called regular butyl rubber, and reclaimed butyl-based rubber. As IIR, any of those used in the tire industry can be suitably used.

The halogenated butyl rubber (X-IIR) is one in which a halogen is introduced in the molecules of regular butyl rubber. For the halogenated butyl rubber, brominated butyl rubber (Br-IIR), chlorinated butyl rubber (Cl-IIR), and the like can be used.

A content of the butyl-based rubber in 100% by mass of the rubber component is 80% by mass or more, preferably 85% by mass or more, more preferably 90% by mass or more because sufficient durability as a vulcanizing bladder can be obtained. Also, the content of the butyl-based rubber is preferably 100% by mass when durability is considered; however, it is preferably 98% by mass or less, more preferably 96% by mass or less when a cross-linking effect by other rubber component is considered. It should be noted that, when two or more types of butyl-based rubber are contained, the content is a total amount of the two or more types of butyl-based rubber.

The rubber component according to the present invention may contain a rubber component other than the butyl-based rubber. Examples of the rubber component other than the butyl-based rubber include diene-based rubbers such as isoprene-based rubber, butadiene rubber (BR), styrene-butadiene rubber (SBR), styrene-isoprene-butadiene rubber (SIBR), chloroprene rubber, acrylonitrile butadiene rubber (NBR), and the like. The rubber component other than the butyl-based rubber can be used alone or in combination of two or more thereof. Among those, chloroprene rubber is preferably contained in addition to the butyl-based rubber because the chloroprene rubber gives overall excellence in deterioration resistance, cross-linking reactivity, chemical resistance, and vulcanization rate.

When chloroprene rubber is contained, a content thereof in 100% by mass of the rubber component is preferably 2% by mass or more, more preferably 3% by mass or more for assuring the performance as a vulcanizing bladder. Also, when the cost and productivity are considered, the content of chloroprene rubber is preferably 10% by mass or less, more preferably 7% by mass or less.

### <Metal filler>

The rubber composition for vulcanizing bladder of the present invention is characterized by containing at least one type of metal filler having a predetermined Mohs hardness and a mean particle size and selected from the group consisting of metal powder, metal oxide powder, metal hydroxide powder, and metal nitride powder. When the metal filler is contained, the thermal conductivity of the rubber composition can be improved.

The Mohs hardness of the metal filler is 8 or lower, preferably 7 or lower. When the Mohs hardness of the metal filler is higher than 8, a problem of equipment wear raises and the dispersibility of the metal filler tends to be lowered. Also, the lower limit of the Mohs hardness is not set; however, it is usually 1 or higher.

A mean particle size of the metal filler (D50) is 0.2 µm or larger, preferably 0.3 µm or larger, more preferably 0.4 µm or larger. When the mean particle size is smaller than 0.2 µm, the metal filler is less likely to be dispersed and tends to be reaggregated, and the strength tends to be degraded. Also, the mean particle size of the metal filler (D50) is preferably 50 µm or smaller, more preferably 20 µm or smaller, further preferably 3 µm or smaller. When the mean particle size is larger than 50 µm, the metal filler can be fracture nucleus, and the strength tends to be degraded. It should be noted that the mean particle size (D50) herein is a particle size of cumulative weight value of 50% of a particle size distribution curve obtained by a particle size distribution measuring apparatus.

The metal filler is at least one type selected from the group consisting of metal powder, metal oxide powder, metal hydroxide powder, and metal nitride powder.

Examples of the metal powder include powders of aluminum, magnesium, and zirconium. Many of the metal powders are in a spherical shape having a surface with little unevenness, where there are fewer points of contact, and thus autoaggregation is less likely to occur; therefore, they are excellent in dispersability. However, when they are ultrafine particles smaller than 2 µm, they tend to absorb more water at the stage of raw material, and there may be a risk of smoke emission. When aluminum powder is used, the dispersability can be further improved by kneading the aluminum powder together with carbon black.

Examples of the metal oxide powder include powders of aluminum oxide (alumina), magnesium oxide, zinc oxide, calcium oxide, and the like. Among those, alumina is also used as an anti-wear coating, an abrasive, and a paint, and the powder shape thereof ranges widely from a spherical shape, a plate-like shape, and to a needle-like shape.

Examples of the metal hydroxide powder include powders of aluminum hydroxide, magnesium hydroxide, calcium hydroxide, and the like. Among those, aluminum hydroxide is light-weighted compared to other metal fillers because aluminum hydroxide often takes a plate shape and has a large surface area. In addition to this, its abundance in resource quantity, easiness in processing and excellence in improving thermal conductivity of a rubber composition make it an effective metal filler. In addition, aluminum hydroxide has a heat absorption property at a temperature near 220°C and is used as a flame retardant; therefore, it can reduce the risk of combustion.

Examples of the metal nitride powder include powders of aluminum nitride, magnesium nitride, and the like. Among those, aluminum nitride is preferable because it is light-weighted, low-cost, easily processed, and low in Mohs hardness.

Among the metal fillers, metal hydroxide powder is preferable because it is excellent in dispersibility when being kneaded and has an excellent effect in improving thermal conductivity and durability of a rubber composition, and aluminum hydroxide powder is more preferable.

A content of the metal filler based on 100 parts by mass of the rubber component is preferably 20 parts by mass or more, preferably 40 parts by mass or more, more preferably 50 parts by mass or more. When the content of the metal filler is less than 20 parts by mass, the effect of improving the thermal conductivity of the rubber composition may be insufficient. Also, the content of the metal filler is 200 parts by mass or less, preferably 180 parts by mass or less, more preferably 160 parts by mass or less. When the content of the metal filler is more than 200 parts by mass, the strength of the rubber composition may be degraded and the durability may be insufficient.

Especially, when aluminum hydroxide powder is contained as the metal filler, the content of the metal filler based on 100 parts by mass of the rubber component is, taking thermal conductivity into consideration, preferably 50 parts by mass or more, more preferably 70 parts by mass or more. Also, the content of the aluminum hydroxide powder is, taking durability into consideration, preferably 200 parts by mass or less, more preferably 180 parts by mass or less.

### <Carbon black>

The rubber composition for vulcanizing bladder of the present invention contains a carbon black. When it contains carbon black, the rubber composition is improved in characteristics of bending fatigue resistance and thermal tensile property, and sufficient durability can be given.

Examples of the carbon black are not particularly limited, and SAF, ISAF, HAF, FF, FEF, GPF, SRF-LM, and the like, which are generally used in the tire industry, are included.

A nitrogen adsorption specific surface area (N₂SA) of the carbon black is preferably 40 m²/g or larger, more preferably 60 m²/g or larger because that improves the durability and makes the bladder life sufficient. Also, the N₂SA is preferably 300 m²/g or smaller, more preferably 140 m²/g or smaller because that favorably assures the dispersibility of the carbon black and the bending resistance. It should be noted that the nitrogen adsorption specific surface area of the carbon black is calculated in accordance with JIS K6217 Method A.

A content of the carbon black based on 100 parts by mass of the rubber component is 20 parts by mass or more, preferably 25 parts by mass or more. When it is less than 20 parts by mass, a sufficient reinforcing property may not be obtained. Also, the content of the carbon black is 80 parts by mass or less, preferably 70 parts by mass or less. When the content is more than 80 parts by mass, the dispersibility of the entire filler becomes degraded, which may cause reduced crack resistance (durability), hardening of local portions, and shortened bladder life.

### <Other compounding agents>

In the rubber compound according to the present invention, in addition to the above-mentioned components, compounding agents which are generally used in manufacturing of a rubber compound for bladder, for example, a zinc oxide, an antioxidant, a processing aid, a release agent, a stearic acid, an inorganic filler other than metal filler and carbon black, a resin component such as tackifier resin, plasticizer such as oil, a heat resistance improver, a flame retardant, a thermal conductivity-imparting agent, and crosslinking agent can be added.

### Terpene-based resin

Examples of the above-mentioned tackifier resin include coumarone resin, petroleum resin (such as aliphatic petroleum resin, aromatic petroleum resin, and alicyclic petroleum resin), phenolic resin, terpene-based resin, and rosin derivative, and the like. Among those, the rubber component for bladder of the present invention preferably contains a terpene-based resin because the dispersibility of fillers including the metal filler and carbon black is improved, and the thermal conductivity of the rubber composition can be further improved.

Examples of the terpene-based resin include a polyterpene resin composed of at least one selected from terpene materials such as α-pinene, β-pinene, limonene, dipentene and the like; an aromatic modified terpene resin made from a terpenic compound and an aromatic compound as raw materials; a terpene resin such as a terpene phenol resin made from a terpenic compound and a phenolic compound as raw materials (a non-hydrogenated terpene-based resin); and those obtained by conducting the hydrogenation treatment on these terpene-based resins (hydrogenated terpene resins). Here, examples of the aromatic compound as a raw material of the aromatic modified terpene resin include, for example, styrene, α-methylstyrene, vinyltoluene, divinyltoluene and the like, and examples of the phenolic compound as a raw material of a terpene phenol resin include, for example, phenol, bisphenol A, cresol, and xylenol and the like.

Among terpene-based resins, a hydrogenated terpene-based resin is preferable for the reason that a more durable vulcanizing bladder can be obtained because a hydrogenated terpene-based is excellent in compatibility with a butyl-based rubber component and the double bond in the chemical structure becomes a single bond by hydrogenation, and a hydrogenated polyterpene resin is more preferable for the reason that it allows near 100% hydrogenation and is excellent in durability. The hydrogenation treatment on the terpene-based resins can be conducted by a known method, and in the present invention, a commercially-available hydrogenated terpene-based resin may be used.

A softening point of the hydrogenated terpene-based resin is, when handling easiness and others are considered, preferably 75°C or higher, more preferably 80°C or higher, further preferably 90°C or higher. Also, when workability and improvement of the dispersibility of the rubber component and the fillers are considered, the softening point is preferably 150°C or lower, more preferably 140°C or lower, further preferably 130°C or lower. It should be noted that for obtaining a softening point of a resin in the present invention a flow tester (manufactured by Shimadzu Corporation, CFT-500D) is used, and a load of 1.96 MPa is applied to 1g of resin as a sample while it is heated at a temperature elevation rate of 6°C/min and the sample is pushed out of a nozzle having 1mm diameter and 1 mm length. Amounts of plunger descent of the flow tester relative to the temperature are plotted to find a temperature where half an amount of the sample flows out, which is the softening point of the resin.

A glass transition temperature (Tg) of the hydrogenated terpene-based resin is preferably 60°C or lower, more preferably 50°C or lower because that prevents the increase of the glass transition temperature of the rubber composition and deterioration of the durability. Also, the lower limit of the glass transition temperature of the hydrogenated terpene-based resin is not particularly set; however, it is preferably 5°C or higher because that allows to make the weight-average molecular weight (Mw) equal to or higher than the oil and at the same time assures hard volatility. Also, the weight-average molecular weight of the hydrogenated terpene-based resin is preferably 300 or less because it is excellent in volatility at a high temperature and easily disappears.

An SP value of the hydrogenated terpene-based resin is preferably close to the SP value 7.7 to 8.1 of a butyl-based rubber, preferably 8.60 or lower, more preferably 8.50 or lower. It should be noted that a SP value denotes a Solubility Parameter calculated in accordance with the Hoy Method based on the structure of a compound. The Hoy Method is a calculation method described in, for example, K. L. Hoy "Table of Solubility Parameters", Solvent and Coatings Materials Research and Development Department, Union Carbites Corp. (1985).

When the hydrogenated terpene-based resin is contained, a content of the hydrogenated terpene-based resin based on 100 parts by mass of the rubber component is preferably 2 parts by mass or more, more preferably 3 parts by mass or more because the effects of the present invention can be favorably obtained. Also, the content of the hydrogenated terpene-based resin is preferably 40 parts by mass or less, more preferably 30 parts by mass or less because hardness, forming workability, and viscosity of the rubber composition can be favorably assured.

### Oil

The above-mentioned oil is not particularly limited, and examples thereof include paraffin oil, which is generally used in the rubber industry, such as process oil and mineral oil; TDAE oil; and castor oil. Among those, a castor oil containing 90% or more ricinoleic acid, which has one double bond and is excellent in resistance to thermal decomposition, is preferable because a durable vulcanizing bladder can be obtained.

When the oil is contained, a content of the oil based on 100 parts by mass of the rubber component is preferably 1.5 parts by mass or more, more preferably 2.0 parts by mass or more because weighting accuracy and wettability to micro parts of the rubber composition can be assured. Also, the content is preferably 10 parts by mass or less, more preferably 8 parts by mass or less because curing of the rubber composition due to volatilization of the oil in use is restrained.

### <The rubber composition and the vulcanizing bladder>

The rubber composition for vulcanizing bladder of the present invention can be manufactured in a general method. For example, it can be manufactured in a method in which, with a known kneading machine used in a general rubber industry, such as a Banbury mixer, a kneader and an open roll, the above-mentioned components except the crosslinking agent and vulcanization accelerator are kneaded, they are further kneaded after the crosslinking agent and vulcanization accelerator are added therein, and then vulcanization is conducted.

A thermal conductivity of the rubber composition according to the present invention is preferably 0.40 W/mK or higher, more preferably 0.45 W/mK or higher because those are excellent thermal conductivities for a rubber composition for vulcanizing bladder and provide excellent vulcanization efficiency. Also, the upper limit of the thermal conductivity is not particularly set; however it is preferably 1.0 W/mK or lower due to the necessity of assuring durability. It should be noted that the thermal conductivity of the rubber composition according to the present invention is a thermal conductivity of a vulcanized rubber composition at a temperature of 23°C, and that can be measured by the hot wire method specified in JIS R 2616.

The vulcanizing bladder for tire vulcanization of the present invention can be manufactured in a procedure in which the above uncrosslinked rubber composition for vulcanizing bladder is extrusion-molded with an extrusion molding machine into a bladder shape and subjected to cross-linking reaction.

### EXAMPLE

The present invention will be specifically described based on Examples; however, the present invention is not to be construed as being limited to those examples.

Each of the chemicals used in the Examples and Comparative Examples will be described. It should be noted that in the below, a chemical "which is not hydrogenated" will be shown as a "non-hydrogenated" chemical and a chemical "which is hydrogenated" as a "hydrogenated" chemical.
IIR: Exxon Butyl 268 (a regular butyl rubber, SP value: 7.8, Tg: -71) from ExxonMobile Chemical Company
CR: Skyprene B-30 (a chloroprene rubber) from Tosoh Corporation Carbon black 1: Show Black N330 (N₂SA: 79 m²/g) from Cabot Japan K.K.
Carbon black 2: Show Black N220 (N₂SA: 115 m²/g) from Cabot Japan K.K.
Carbon black 3: Lionite (N₂SA: 1052 m²/g, an electroconductive carbon black) from LION corporation
Aluminum powder 1: TFH-A30P (mean particle size: 30 µm, Mohs hardness: 2.5) from Toyo Aluminum Co., Ltd.
Aluminum powder 2: TFH-A10P (mean particle size: 10 µm, Mohs hardness: 2.5) from Toyo Aluminum Co., Ltd.
Aluminum powder 3: TFH-A02P (mean particle size: 2 µm, Mohs hardness: 2.5) from Toyo Aluminum Co., Ltd.
Aluminum nitride powder 1: TFZ-A10P (mean particle size: 10 µm, Mohs hardness: 8) from Toyo Aluminum Co., Ltd.
Aluminum nitride powder 2: TFZ-A02P (mean particle size: 2 µm, Mohs hardness: 8) from Toyo Aluminum Co., Ltd.
Aluminum hydroxide powder 1: Ath#B (mean particle size: 0.6 µm, oblateness: 15, N₂SA: 15 m²/g, Mohs hardness: 3) from Sumitomo Chemical Co., Ltd.
Aluminum hydroxide powder 2: C301N (mean particle size: 1.3 µm, N₂SA: 4 m²/g, Mohs hardness: 3) from Sumitomo Chemical Co., Ltd.
Aluminum hydroxide powder 3: C302A (mean particle size: 2.5 µm, N₂SA: 3 m²/g, Mohs hardness: 3) from Sumitomo Chemical Co., Ltd.
Alumina: AKP-3000 (mean particle size: 0.7 µm, N₂SA: 4.5 m²/g, Mohs hardness: 9) from Sumitomo Chemical Co., Ltd.
Castor oil: castor oil from Itoh Oil Chemicals Co., Ltd.
Hydrogenated polyterpene 1: P85 (SP value: 8.36, softening point 85°C, Tg: 43) from Yasuhara Chemical Co., Ltd.
Hydrogenated polyterpene 2: P105 (SP value: 8.36, softening point 105°C, Tg: 55) from Yasuhara Chemical Co., Ltd.
Hydrogenated polyterpene 3: P125 (SP value: 8.36, softening point 125°C, Tg: 67) from Yasuhara Chemical Co., Ltd.
Hydrogenated polyterpene 4: P150 (SP value: 8.36, softening point 150°C, Tg: 90) from Yasuhara Chemical Co., Ltd.
AMS resin: SA85 (SP value: 9.1, softening point: 85°C, Tg: 43) from Arizona Chemical Company, LLC.
Non-hydrogenated aromatic terpene: TO85 (SP value: 8.73, softening point 85°C, Tg: 41) from Yasuhara Chemical Co., Ltd.
Hydrogenated aromatic terpene 1: M105 (SP value: 8.52, softening point 105°C, Tg: 55) from Yasuhara Chemical Co., Ltd.
Hydrogenated aromatic terpene 2: M125 (SP value: 8.52, softening point 125°C, Tg: 65) from Yasuhara Chemical Co., Ltd.
Non-hydrogenated polyterpene: PX800 (SP value: 8.42, softening point 80°C, Tg: 42) from Yasuhara Chemical Co., Ltd.
Zinc oxide: two types of zinc oxide from Mitsui Mining & Smelting Co., Ltd.
Stearic acid: a stearic acid "Tsubaki" from NOF Corporation Antioxidant: antithesis W-500 (2,2'-methylene-bis-(4-ethyl-6-tert-butylphenol)) form Kawaguchi Chemical Industry Co., Ltd.
Crosslinking agent: Tackirol TK201 (a resol-type alkyl phenol-formaldehyde resin) from Taoka Chemical Co., Ltd.

### Examples and Comparative Examples

In accordance with the formulations shown in Tables 1 to 4, among the compound agents, the chemicals other than a crosslinking agent were kneaded by using a 2.0L Banbury mixer for 4 minutes till the temperature at discharge became 130°C, and a kneaded product was obtained. Next, the obtained kneaded product was, with a crosslinking agent added thereto, kneaded by using the 2.0L Banbury mixer for 3 minutes at a temperature of 90°C at discharge, and an unvulcanized rubber composition was obtained. The obtained unvulcanized rubber composition was rolled into a rubber sheet with a thickness of 2 mm and press-vulcanized for 30 minutes at a temperature of 190°C with a test mold to obtain a vulcanized rubber composition. With the above-mentioned kneaded product and vulcanized rubber composition, each of the below evaluations was performed.

### Thermal conductivity

A thermal conductivity (W/mK) at 23°C of each vulcanized rubber composition was measured with a quick thermal conductivity meter (kemtherm QTM-500 manufactured by Kyoto Electronics Manufacturing Co., Ltd.) in accordance with the hot wire method specified in JIS R 2616. Results are shown in Tables 1 to 4. A higher thermal conductivity indicates a better heat conducting property. The performance target value of the thermal conductivity in the present invention is 0.35 W/mK or higher.

### Kneading property

Each kneaded product was further kneaded at 80°C for 2 minutes with a 6-inch 2-axis roll and molded into a rubber sheet with a width of 1m and a thickness of 2mm. Flatness, white blooming property and straightness of edge, of the sheet are visually observed and evaluated in an index number, where the index of Comparative Example 1 is assumed to be 100. Results are shown in Tables 1 to 4. A higher index number of kneading property indicates a better dispersibility of fillers in a rubber component and a better forming workability. The performance target value of the index numbers of the kneading property in the present invention is 90 or higher.

### Durability

With a No. 3 dumb-bell test specimen formed of each rubber composition, an elongation at break EB (%) at 150°C is measured in accordance with JIS K 6251 "Rubber, vulcanized or thermoplastics - Determination of tensile stress-strain properties" and evaluated in an index number, where the index of Comparative Example 1 is assumed to be 100. Results are shown in Tables 1 to 4. A higher index number of durability indicates a better elongation at break at 150°C and a better durability. The performance target value of the index numbers of durability in the present invention is 80 or higher.

**Table 1**

| | Examples | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Blending quantity (parts by mass) | | | | | | | | | | | | |
| IIR | 95 | 95 | 97 | 95 | 95 | 95 | 95 | 95 | 95 | 97 | 97 | 97 |
| CR | 5 | 5 | 3 | 5 | 5 | 5 | 5 | 5 | 5 | 3 | 3 | 3 |
| Carbon black 1 | 50 | 50 | 50 | 50 | 50 | 50 | 50 | 50 | 50 | 50 | 50 | - |
| Carbon black 2 | - | - | - | - | - | - | - | - | - | - | - | 50 |
| Carbon black 3 | - | - | - | - | - | - | - | - | - | - | - | - |
| Aluminum powder 1 | - | - | - | 50 | - | 80 | - | - | - | - | - | - |
| Aluminum powder 2 | - | - | - | - | 50 | - | - | - | - | - | - | - |
| Aluminum powder 3 | 100 | 30 | 180 | 50 | 50 | - | - | - | - | - | - | - |
| Aluminum nitride powder 1 | - | - | - | - | - | - | - | 50 | - | - | - | - |
| Aluminum nitride powder 2 | - | - | - | - | - | - | 100 | 50 | - | - | - | - |
| Aluminum hydroxide powder 1 | - | - | - | - | - | - | - | - | 100 | 125 | 180 | 125 |
| Aluminum hydroxide powder 2 | - | - | - | - | - | - | - | - | - | - | - | - |
| Aluminum hydroxide powder 3 | - | - | - | - | - | - | - | - | - | - | - | - |
| Alumina | - | - | - | - | - | - | - | - | - | - | - | - |
| Castor oil | 3 | 3 | 3 | 3 | 3 | 3 | 3 | 3 | 3 | 3 | 3 | 3 |
| Hydrogenated polyterpene 1 | 4 | 4 | 8 | 4 | 4 | 4 | 4 | 4 | 4 | 6 | 8 | 6 |
| Hydrogenated polyterpene 2 | - | - | - | - | - | - | - | - | - | - | - | - |
| Hydrogenated polyterpene 3 | - | - | - | - | - | - | - | - | - | - | - | - |
| Hydrogenated polyterpene 4 | - | - | - | - | - | - | - | - | - | - | - | - |
| AMS resin | - | - | - | - | - | - | - | - | - | - | - | - |
| Non-hydrogenated aromatic terpene | - | - | - | - | - | - | - | - | - | - | - | - |
| Hydrogenated aromatic terpene 1 | - | - | - | - | - | - | - | - | - | - | - | - |
| Hydrogenated aromatic terpene 2 | - | - | - | - | - | - | - | - | - | - | - | - |
| Non-hydrogenated polyterpene | - | - | - | - | - | - | - | - | - | - | - | - |
| Zinc oxide | 5 | 5 | 5 | 5 | 5 | 5 | 5 | 5 | 5 | 5 | 5 | 5 |
| Stearic acid | 1 | 1 | 1 | 1 | 1 | 1 | 1 | 1 | 1 | 1 | 1 | 1 |
| Antioxidant | 1.5 | 1.5 | 1.5 | 1.5 | 1.5 | 1.5 | 1.5 | 1.5 | 1.5 | 1.5 | 1.5 | 1.5 |
| Crosslinking agent | 7 | 7 | 8 | 7 | 7 | 7 | 7 | 7 | 7 | 8 | 8 | 8 |

| Results of evaluations | | | | | | | | | | | | |
|---|---|---|---|---|---|---|---|---|---|---|---|---|
| Thermal conductivity (W/mK) | 0.42 | 0.35 | 0.50 | 0.45 | 0.44 | 0.42 | 0.41 | 0.44 | 0.42 | 0.48 | 0.53 | 0.50 |
| Index number of kneading property | 110 | 110 | 90 | 100 | 105 | 100 | 110 | 105 | 120 | 110 | 105 | 110 |
| Index number of durability | 95 | 95 | 80 | 92 | 93 | 90 | 95 | 92 | 95 | 85 | 80 | 95 |

**Table 2**

| | Examples | | | | | | | | | |
|---|---|---|---|---|---|---|---|---|---|---|
| | 13 | 14 | 15 | 16 | 17 | 18 | 19 | 20 | 21 | 22 |
| Blending quantity (parts by mass) | | | | | | | | | | |
| IIR | 95 | 95 | 95 | 95 | 95 | 95 | 97 | 95 | 95 | 95 |
| CR | 5 | 5 | 5 | 5 | 5 | 5 | 3 | 5 | 5 | 5 |
| Carbon black 1 | 50 | 50 | 50 | 50 | 50 | 50 | 50 | 30 | 70 | - |
| Carbon black 2 | - | - | - | - | - | - | - | - | - | 50 |
| Carbon black 3 | - | - | - | - | - | - | - | - | - | - |
| Aluminum powder 1 | - | - | - | - | - | - | - | - | - | - |
| Aluminum powder 2 | - | - | - | - | - | - | - | - | - | - |
| Aluminum powder 3 | - | 50 | 50 | 50 | 50 | 100 | 100 | 100 | 100 | 100 |
| Aluminum nitride powder 1 | - | - | - | - | - | - | - | - | - | - |
| Aluminum nitride powder 2 | - | - | - | - | - | - | - | - | - | - |
| Aluminum hydroxide powder 1 | - | - | - | 50 | - | - | - | - | - | - |
| Aluminum hydroxide powder 2 | - | 50 | - | - | - | - | - | - | - | - |
| Aluminum hydroxide powder 3 | 100 | - | 50 | - | - | - | - | - | - | - |
| Alumina | - | - | - | - | 50 | - | - | - | - | - |
| Castor oil | 3 | 3 | 3 | 3 | 3 | 5 | 3 | 0 | 3 | 1 |
| Hydrogenated polyterpene 1 | 4 | 4 | 4 | 4 | 4 | - | - | 4 | 10 | 6 |
| Hydrogenated polyterpene 2 | - | - | - | - | - | - | - | - | - | - |
| Hydrogenated polyterpene 3 | - | - | - | - | - | - | - | - | - | - |
| Hydrogenated polyterpene 4 | - | - | - | - | - | - | - | - | - | - |
| AMS resin | - | - | - | - | - | - | - | - | - | - |
| Non-hydrogenated aromatic terpene | - | - | - | - | - | - | - | - | - | - |
| Hydrogenated aromatic terpene 1 | - | - | - | - | - | - | - | - | - | - |
| Hydrogenated aromatic terpene 2 | - | - | - | - | - | - | - | - | - | - |
| Non-hydrogenated polyterpene | - | - | - | - | - | - | - | - | - | - |
| Zinc oxide | 5 | 5 | 5 | 5 | 5 | 5 | 5 | 5 | 5 | 5 |
| Stearic acid | 1 | 1 | 1 | 1 | 1 | 1 | 1 | 1 | 1 | 1 |
| Antioxidant | 1.5 | 1.5 | 1.5 | 1.5 | 1.5 | 1.5 | 1.5 | 1.5 | 1.5 | 1.5 |
| Crosslinking agent | 7 | 7 | 7 | 7 | 7 | 7 | 8 | 7 | 7 | 7 |

| Results of evaluations | | | | | | | | | | |
|---|---|---|---|---|---|---|---|---|---|---|
| Thermal conductivity (W/mK) | 0.44 | 0.36 | 0.38 | 0.41 | 0.40 | 0.40 | 0.41 | 0.39 | 0.45 | 0.44 |
| Index number of kneading property | 95 | 110 | 110 | 110 | 110 | 90 | 105 | 90 | 90 | 95 |
| Index number of durability | 85 | 100 | 90 | 95 | 95 | 85 | 95 | 90 | 85 | 105 |

**Table 3**

| | Examples | | | | | | | |
|---|---|---|---|---|---|---|---|---|
| | 23 | 24 | 25 | 26 | 27 | 28 | 29 | 30 |
| Blending quantity (parts by mass) | | | | | | | | |
| IIR | 95 | 95 | 95 | 95 | 95 | 95 | 95 | 95 |
| CR | 5 | 5 | 5 | 5 | 5 | 5 | 5 | 5 |
| Carbon black 1 | 50 | 50 | 50 | 50 | 50 | 50 | 50 | 50 |
| Carbon black 2 | - | - | - | - | - | - | - | - |
| Carbon black 3 | - | - | - | - | - | - | - | - |
| Aluminum powder 1 | - | - | - | - | - | - | - | - |
| Aluminum powder 2 | - | - | - | - | - | - | - | - |
| Aluminum powder 3 | 100 | 100 | 100 | 100 | 100 | 100 | 100 | 100 |
| Aluminum nitride powder 1 | - | - | - | - | - | - | - | - |
| Aluminum nitride powder 2 | - | - | - | - | - | - | - | - |
| Aluminum hydroxide powder 1 | - | - | - | - | - | - | - | - |
| Aluminum hydroxide powder 2 | - | - | - | - | - | - | - | - |
| Aluminum hydroxide powder 3 | - | - | - | - | - | - | - | - |
| Alumina | - | - | - | - | - | - | - | - |
| Castor oil | 3 | 3 | 3 | 3 | 3 | 3 | 3 | 3 |
| Hydrogenated polyterpene 1 | - | - | - | - | - | - | - | - |
| Hydrogenated polyterpene 2 | 4 | - | - | - | - | - | - | - |
| Hydrogenated polyterpene 3 | - | 4 | - | - | - | - | - | - |
| Hydrogenated polyterpene 4 | - | - | 4 | - | - | - | - | - |
| AMS resin | - | - | - | 4 | - | - | - | - |
| Non-hydrogenated aromatic terpene | - | - | - | - | 4 | - | - | - |
| Hydrogenated aromatic terpene 1 | - | - | - | - | - | 4 | - | - |
| Hydrogenated aromatic terpene 2 | - | - | - | - | - | - | 4 | - |
| Non-hydrogenated polyterpene | - | - | - | - | - | - | - | 4 |
| Zinc oxide | 5 | 5 | 5 | 5 | 5 | 5 | 5 | 5 |
| Stearic acid | 1 | 1 | 1 | 1 | 1 | 1 | 1 | 1 |
| Antioxidant | 1.5 | 1.5 | 1.5 | 1.5 | 1.5 | 1.5 | 1.5 | 1.5 |
| Crosslinking agent | 7 | 7 | 7 | 7 | 7 | 7 | 7 | 7 |

| Results of evaluations | | | | | | | | |
|---|---|---|---|---|---|---|---|---|
| Thermal conductivity (W/mK) | 0.42 | 0.41 | 0.40 | 0.39 | 0.42 | 0.42 | 0.40 | 0.42 |
| Index number of kneading property | 105 | 95 | 90 | 95 | 105 | 100 | 90 | 110 |
| Index number of durability | 95 | 95 | 95 | 80 | 95 | 95 | 90 | 90 |

**Table 4**

| | Comparative Examples | | | | | | | | | |
|---|---|---|---|---|---|---|---|---|---|---|
| | 1 | 2 | 3 | 4 | 5 | 6 | 7 | 9 | 10 | 11 |
| Blending quantity (parts by mass) | | | | | | | | | | |
| IIR | 95 | 95 | 95 | 95 | 95 | 75 | 95 | 95 | 95 | 95 |
| CR | 5 | 5 | 5 | 5 | 5 | 25 | 5 | 5 | 5 | 5 |
| Carbon black 1 | 50 | 50 | 50 | 15 | 90 | 50 | 70 | 50 | 50 | 25 |
| Carbon black 2 | - | - | - | - | - | - | - | - | - | - |
| Carbon black 3 | - | - | - | - | - | - | - | - | - | 25 |
| Aluminum powder 1 | - | - | - | - | - | - | - | - | - | - |
| Aluminum powder 2 | - | - | - | - | - | - | - | - | - | - |
| Aluminum powder 3 | - | 15 | 220 | 100 | 100 | 100 | - | - | - | - |
| Aluminum nitride powder 1 | - | - | - | - | - | - | - | - | - | - |
| Aluminum nitride powder 2 | - | - | - | - | - | - | - | - | - | - |
| Aluminum hydroxide powder 1 | - | - | - | - | - | - | - | 220 | - | - |
| Aluminum hydroxide powder 2 | - | - | - | - | - | - | - | - | - | - |
| Aluminum hydroxide powder 3 | - | - | - | - | - | - | - | - | - | - |
| Alumina | - | - | - | - | - | - | - | - | - | - |
| Castor oil | 5 | 3 | 3 | 3 | 3 | 3 | 3 | 3 | 3 | 3 |
| Hydrogenated polyterpene 1 | - | 4 | 10 | 4 | 8 | 4 | 8 | 10 | 4 | 8 |
| Hydrogenated polyterpene 2 | - | - | - | - | - | - | - | - | - | - |
| Hydrogenated polyterpene 3 | - | - | - | - | - | - | - | - | - | - |
| Hydrogenated polyterpene 4 | - | - | - | - | - | - | - | - | - | - |
| AMS resin | - | - | - | - | - | - | - | - | - | - |
| Non-hydrogenated aromatic terpene | - | - | - | - | - | - | - | - | - | - |
| Hydrogenated aromatic terpene 1 | - | - | - | - | - | - | - | - | - | - |
| Hydrogenated aromatic terpene 2 | - | - | - | - | - | - | - | - | - | - |
| Non-hydrogenated polyterpene | - | - | - | - | - | - | - | - | - | - |
| Zinc oxide | 5 | 5 | 5 | 5 | 5 | 5 | 5 | 5 | 100 | 5 |
| Stearic acid | 1 | 1 | 1 | 1 | 1 | 1 | 1 | 1 | 1 | 1 |
| Antioxidant | 1.5 | 1.5 | 1.5 | 1.5 | 1.5 | 1.5 | 1.5 | 1.5 | 1.5 | 1.5 |
| Crosslinking agent | 7 | 7 | 7 | 7 | 7 | 7 | 7 | 7 | 7 | 7 |

| Results of evaluations | | | | | | | | | | |
|---|---|---|---|---|---|---|---|---|---|---|
| Thermal conductivity (W/mK) | 0.29 | 0.32 | 0.53 | 0.31 | 0.42 | 0.44 | 0.34 | 0.59 | 0.32 | 0.29 |
| Index number of kneading property | 100 | 120 | 70 | 85 | 70 | 105 | 80 | 90 | 120 | 95 |
| Index number of durability | 100 | 120 | 60 | 55 | 50 | 70 | 75 | 50 | 85 | 90 |

Results from Tables 1 to 4 show that the rubber composition for vulcanizing bladder of the present invention is a rubber composition excellent in thermal conductivity, and the vulcanizing bladder of the present invention manufactured with the rubber composition is a vulcanizing bladder excellent in vulcanization efficiency.

## Claims

1. A rubber composition for vulcanizing bladder comprising:
based on 100 parts by mass of a rubber component comprising 80% by mass or more of a butyl-based rubber,
20 to 200 parts by mass of at least one type of metal filler selected from the group consisting of metal powder, metal oxide powder, metal hydroxide powder and metal nitride powder, said metal filler having a Mohs hardness of 8 or lower and a mean particle size of 0.3 to 50 µm, and
20 to 80 parts by mass of a carbon black,
wherein the rubber composition for vulcanizing bladder is not a rubber composition comprising:
a rubber component containing 100 % by mass of a bromobutyl rubber based on 100 parts by mass of the rubber component,
45 parts by mass of carbon black based on 100 parts by mass of the rubber component,
20 parts by mass of aluminium hydroxide having a Mohs hardness of 3 and a mean particle size of 0.3 µm or 0.6 µm or 1.0 µm or 2.5 µm based on 100 parts by mass of the rubber component.

2. The rubber composition for vulcanizing bladder of claim 1, wherein the metal filler comprises aluminum hydroxide.

3. The rubber composition for vulcanizing bladder of claim 1, wherein the metal filler comprises 70 to 150 parts by mass of aluminum hydroxide having a mean particle size of 0.3 to 3 µm based on 100 parts by mass of a rubber component.

4. The rubber composition for vulcanizing bladder of any one of claims 1 to 3, wherein the rubber component further comprises 1 to 10% parts by mass of a chloroprene rubber.

5. The rubber composition for vulcanizing bladder of any one of claims 1 to 4, further comprising a terpene-based resin.

6. The rubber composition for vulcanizing bladder of claim 5, wherein the terpene-based resin is a hydrogenated terpene-based resin having a softening point of 60 to 130°C.

7. A vulcanizing bladder formed of the rubber composition for vulcanizing bladder of any one of claims 1 to 6.

## Patentansprüche

1. Kautschukzusammensetzung für einen Vulkanisations-Heizbalg, welche umfasst:
bezogen auf 100 Massenteile einer Kautschukkomponente, die 80 Massenprozent oder mehr eines butylbasierten Kautschuks umfasst,
20 bis 200 Massenteile zumindest eines Typs von Metall-Füllstoff, der ausgewählt ist aus der Gruppe bestehend aus Metallpulver, Metalloxidpulver, Metallhydroxidpulver und Metallnitridpulver, wobei der Metall-Füllstoff eine Mohs-Härte von 8 oder niedriger und eine mittlere Partikelgröße von 0,3 bis 50 µm aufweist, und
20 bis 80 Massenteile eines Rußes,
wobei die Kautschukzusammensetzung für einen Vulkanisations-Heizbalg keine Kautschukzusammensetzung ist, welche umfasst:
eine Kautschukkomponente, die 100 Massenprozent eines Brombutylkautschuks enthält, bezogen auf 100 Massenteile der Kautschukkomponente,
45 Massenteile Ruß, bezogen auf 100 Massenteile der Kautschukkomponente,
20 Massenteile Aluminiumhydroxid mit einer Mohs-Härte von 3 und einer mittleren Partikelgröße von 0,3 µm oder 0,6 µm oder 1,0 µm oder 2,5 µm, bezogen auf 100 Massenteile der Kautschukkomponente.

2. Kautschukzusammensetzung für einen Vulkanisations-Heizbalg nach Anspruch 1, wobei der Metall-Füllstoff Aluminiumhydroxid umfasst.

3. Kautschukzusammensetzung für einen Vulkanisations-Heizbalg nach Anspruch 1, wobei der Metall-Füllstoff 70 bis 150 Massenteile Aluminiumhydroxid mit einer mittleren Partikelgröße von 0,3 bis 3 µm umfasst, bezogen auf 100 Massenteile einer Kautschukkomponente.

4. Kautschukzusammensetzung für einen Vulkanisations-Heizbalg nach einem der Ansprüche 1 bis 3, wobei die Kautschukkomponente zudem 1 bis 10% Massenteile eines Chloroprenkautschuks umfasst.

5. Kautschukzusammensetzung für einen Vulkanisations-Heizbalg nach einem der Ansprüche 1 bis 4, welche zudem ein Terpen-basiertes Harz umfasst.

6. Kautschukzusammensetzung für einen Vulkanisations-Heizbalg nach Anspruch 5, wobei das Terpen-basierte Harz ein hydriertes Terpen-basiertes Harz mit einem Erweichungspunkt von 60 bis 130 °C ist.

7. Vulkanisations-Heizbalg, welcher aus der Kautschukzusammensetzung für einen Vulkanisations-Heizbalg nach einem der Ansprüche 1 bis 6 gebildet ist.

## Revendications

1. Composition de caoutchouc pour poche de vulcanisation comprenant :
sur la base de 100 parties en masse d'un composant caoutchouc comprenant 80 % en masse ou plus d'un caoutchouc à base de butyle :
20 à 200 parties en masse d'au moins un type de charge métallique sélectionnée parmi le groupe comprenant : poudre de métal, poudre d'oxyde de métal, poudre d'hydroxyde de métal et poudre de nitrure de métal, ladite charge métallique ayant une dureté de Mohs égale à 8 ou moins et une taille de particules moyenne de 0,3 à 50 µm, et
20 à 80 parties en masse de noir de carbone,
dans laquelle la composition de caoutchouc pour poche de vulcanisation n'est pas une composition de caoutchouc comprenant :
un composant caoutchouc contenant 100 % en masse de caoutchouc bromobutyle, sur la base de 100 parties en masse du composant caoutchouc,
45 % en masse de noir de carbone, sur la base de 100 parties en masse du composant caoutchouc,
20 parties en masse d'hydroxyde d'aluminium ayant une dureté de Mohs égale à 3 et une taille de particules moyenne de 0,3 µm ou 0,6 µm ou 1,0 µm ou 2,5 µm, sur la base de 100 parties en masse du composant caoutchouc.

2. Composition de caoutchouc pour poche de vulcanisation selon la revendication 1, dans laquelle la charge métallique comprend de l'hydroxyde d'aluminium.

3. Composition de caoutchouc pour poche de vulcanisation selon la revendication 1, dans laquelle la charge métallique comprend de 70 à 150 parties en masse d'hydroxyde d'aluminium ayant une taille de particules moyenne de 0,3 à 3 µm sur la base de 100 parties en masse d'un composant caoutchouc.

4. Composition de caoutchouc pour poche de vulcanisation selon l'une quelconque des revendications 1 à 3, dans laquelle le composant caoutchouc comprend en outre de 1 à 10 % en masse d'un caoutchouc chloroprène.

5. Composition de caoutchouc pour poche de vulcanisation selon l'une quelconque des revendications 1 à 4, comprenant en outre une résine à base de terpène.

6. Composition de caoutchouc pour poche de vulcanisation selon la revendication 5, dans laquelle la résine à base de terpène est une résine hydrogénée à base de terpène ayant un point de ramollissement de 60 à 130° C.

7. Poche de vulcanisation formée de la composition de caoutchouc pour poche de vulcanisation selon l'une quelconque des revendications 1 à 16.
